# EUROPEAN PATENT APPLICATION

(11) **EP 4 242 945 A1**
(43) Date of publication of application: **13.09.2023**
(21) Application number: 21888292.6
(22) Date of filing: 09.09.2021
(51) Int. Cl.: G06Q 10/08

(54) **WAREHOUSE MANAGEMENT SYSTEM AND METHOD**

(30) Priority: 05.11.2020 CN 202011222722
(71) Applicant: Beijing Geekplus Technology Co., Ltd., Chaoyang District Beijing 100102 (CN)
(72) Inventor: YU, Xiaogang, Beijing 100102 (CN); LI, Hongbo, Beijing 100102 (CN)
(74) Representative: Zimmermann, Tankred Klaus
(86) International application number: PCT/CN2021/117390
(87) International publication number: WO 2022/095593

(57) **Abstract**

A warehouse management system and a method, the warehouse management system comprising: a control server (110), configured to assign a first sub-order to a first workstation, send a first transport instruction to a first storage container transport device (140), assign a second sub-order to a second workstation, send a second transport instruction to a second storage container transport device (150), and after a picking task corresponding to any sub-order is completed, send a third transport instruction to an order container transport device; a first storage container transport device (140), configured to transport, in response to the first transport instruction, a first storage container to the first workstation; a second storage container transport device (150), configured to transport, in response to the second transport instruction, a second storage container to the second workstation; and an order container transport device, configured to transport, in response to the third transport instruction, an order container for which picking has been completed at the first workstation to the second workstation, or, transport an order container for which picking has been completed at the second workstation to the first workstation.

## Description

### CROSS-REFERENCE TO RELATED APPLICATIONS

The present invention claims priority to and benefits of Chinese Patent Application No. 202011222722.3, filed on November 05, 2020, entitled "WAREHOUSE MANAGEMENT SYSTEM AND METHOD" field with the China National Intellectual Property Administration, the entire content of which is incorporated herein by reference.

### TECHNICAL FIELD

The present invention relates to a technical field of warehouse, and more particularly to a warehouse management system and method.

### BACKGROUND

With the rapid development of e-commerce, e-commerce is playing an increasingly important role in the lives of consumers. The number of user orders increases exponentially every year, and the processing capacity of the warehouse management is also undergoing severe tests.

In the existing warehouse management system, a shelf handling robot or a tote handling robot is selected to transfer the corresponding shelf or tote through the storage area according to the order task. However, in this case, conflicts sometimes occur. For example, a shelf corresponding to the tote selected to be picked by the tote handling robot according to an order is also targeted by the shelf handling robot according to another order, which requires queuing and thus causes inefficient warehouse management.

Therefore, there is an urgent need for technicians to improve the efficiency of the warehouse management.

### SUMMARY

In view of this, embodiments of the present invention provide a warehouse management system and method to solve the technical problems existing in the related art.

In a first aspect of embodiments of the present invention, a warehouse management system is provided, including: a control server, a first storage area, a second storage area, a first inventory receptacle handling device, a second inventory receptacle handling device and an order receptacle handling device. A first inventory receptacle and a first workstation are arranged in the first storage area, a second inventory receptacle and a second workstation are arranged in the second storage area, and the first inventory receptacle handling device and the second inventory receptacle handling device are communicatively connected to the control server. The control server is configured to: when it is determined that order products in an order task are to be selected from both the first inventory receptacle in the first storage area and the second inventory receptacle in the second storage area, split the order task into a first sub-order and a second sub-order according to the order task, dispatch the first sub-order to the first workstation located in the first storage area, and send a first handling instruction to the first inventory receptacle handling device, dispatch the second sub-order to the second workstation located in the second storage area, and send a second handling instruction to the second inventory receptacle handling device, and send a third handling instruction to the order receptacle handling device after determining that a selecting task corresponding to one sub-order of the two sub-orders is completed. The first inventory receptacle handling device is configured to, when the first sub-order is dispatched to the first workstation in the first storage area, transport a specified first inventory receptacle from the first storage area to the first workstation in response to the first handling instruction. The second inventory receptacle handling device is configured to, when the second sub-order is dispatched to the second workstation in the second storage area, transport a specified second inventory receptacle from the second storage area to the second workstation in response to the second handling instruction. The order receptacle handling device is configured to, in response to the third handling instruction, transport an order receptacle containing a product selected at the first workstation to the second workstation, or transport an order receptacle containing a product selected at the second workstation to the first workstation.

Optionally, the first inventory receptacle is a movable inventory shelf, and the first inventory receptacle handling device is a shelf handling robot. The shelf handling robot is further configured to transport a specified movable inventory shelf from the first storage area to the first workstation in response to the first handling instruction.

Optionally, the second inventory receptacle is an inventory tote, and the second inventory receptacle handling device is a tote handling robot. The tote handling robot is further configured to transport a specified inventory tote from the second storage area to the second workstation in response to the second handling instruction.

Optionally, the order receptacle is a movable order shelf, an order tote, or a movable order shelf provided with an order tote.

Optionally, the order receptacle handling device is a shelf handling robot or a tote handling robot.

Optionally, the shelf handling robot is configured to transport the movable order shelf selected at the first workstation to the second workstation. Alternatively, the tote handling robot is configured to transport the order tote selected at the second workstation to the first workstation.

In a second aspect of embodiments of the present invention, a warehouse management system is provided, including: a control server, a first storage area, a second storage area, a first inventory receptacle handling device, a second inventory receptacle handling device and an order receptacle handling device. A first inventory receptacle and a first workstation are arranged in the first storage area, a second inventory receptacle and a second workstation are arranged in the second storage area, and the first inventory receptacle handling device and the second inventory receptacle handling device are communicatively connected to the control server. The control server is configured to: when it is determined that order products in an order task are to be selected from both the first inventory receptacle in the first storage area and the second inventory receptacle in the second storage area, split the order task into a first sub-order and a second sub-order according to the order task, dispatch the first sub-order to the first workstation located in the first storage area, and send a first handling instruction to the first inventory receptacle handling device, dispatch the second sub-order to the second workstation located in the second storage area, and send a second handling instruction to the second inventory receptacle handling device, and send a third handling instruction to the order receptacle handling device after determining that a selecting task corresponding to one sub-order of the two sub-orders is completed. The first inventory receptacle handling device is configured to, when the first sub-order is dispatched to the first workstation in the first storage area, transport a specified first inventory receptacle from the first storage area to the first workstation in response to the first handling instruction. The second inventory receptacle handling device is configured to, when the second sub-order is dispatched to the second workstation in the second storage area, transport a specified second inventory receptacle from the second storage area to the second workstation in response to the second handling instruction. The order receptacle handling device is configured to, in response to the third handling instruction, transport an order receptacle containing a product selected at the first workstation and an order receptacle containing a product selected at the second workstation to a specified confluence location to complete order consolidation.

Optionally, the first inventory receptacle is a movable inventory shelf, and the first inventory receptacle handling device is a shelf handling robot. The shelf handling robot is further configured to transport a specified movable inventory shelf from the first storage area to the first workstation in response to the first handling instruction.

Optionally, the second inventory receptacle is an inventory tote, and the second inventory receptacle handling device is a tote handling robot. The tote handling robot is further configured to transport a specified inventory tote from the second storage area to the second workstation in response to the second handling instruction.

Optionally, the order receptacle is a movable order shelf, an order tote, or a movable order shelf provided with an order tote.

Optionally, the order receptacle handling device is the shelf handling robot or the tote handling robot.

Optionally, the shelf handling robot is configured to transport the movable order shelf selected at the first workstation to the specified confluence location to complete the order consolidation. The tote handling robot is configured to transport the order tote selected at the second workstation to the specified confluence location to complete the order consolidation.

In a third aspect of embodiments of the present invention, a warehouse management system is provided, including: a control server, a first storage area, a second storage area, a first inventory receptacle handling device and a second inventory receptacle handling device. A first inventory receptacle is arranged in the first storage area, a second inventory receptacle is arranged in the second storage area, a workstation is arranged and shared by the first storage area and the second storage area, and the first inventory receptacle handling device and the second inventory receptacle handling device are communicatively connected to the control server. The control server is configured to, when it is determined that products in an inventory task are to be selected from both the first inventory receptacle in the first storage area and the second inventory receptacle in the second storage area, dispatch the inventory task to a workstation according to the inventory task, send a first handling instruction to the first inventory receptacle handling device, and send a second handling instruction to the second inventory receptacle handling device. The first inventory receptacle handling device is configured to transport a specified first inventory receptacle from the first storage area to the workstation in response to the first handling instruction. The second inventory receptacle handling device is configured to transport a specified second inventory receptacle from the second storage area to the workstation in response to the second handling instruction.

Optionally, the inventory task includes at least one selected from a storage task, an order task or a combination thereof.

Optionally, the first inventory receptacle is a movable inventory shelf, and the first inventory receptacle handling device is a shelf handling robot. The shelf handling robot is further configured to transport a specified movable inventory shelf from the first storage area to the workstation in response to the first handling instruction.

Optionally, the second inventory receptacle is an inventory tote, and the second inventory receptacle handling device is a tote handling robot. The tote handling robot is further configured to transport a specified inventory tote from the second storage area to the workstation in response to the second handling instruction.

Optionally, the control server is further configured to, in the case that the inventory task is the storage task, classify products to be stored into a first type of product to be stored of the first storage area and a second type of product to be stored of the second storage area according to a preset product classification rule, split the storage task into a first subtask for storing the first type of product to be stored and a second subtask for storing the second type of product to be stored, and dispatch the first subtask and the second subtask to the workstation.

Optionally, the control server is further configured to classify the products to be stored into the first type of product to be stored and the second type of product to be stored according to at least one selected from shape information, popularity information, relevance information of the products or any combination thereof.

In a fourth aspect of embodiments of the present invention, a warehouse management system is provided, including: a control server, a first storage area, a second storage area, a first inventory receptacle handling device, and a second inventory receptacle handling device. A first inventory receptacle and a first workstation are arranged in the first storage area, a second inventory receptacle and a second workstation are arranged in the second storage area, and the first inventory receptacle handling device and the second inventory receptacle handling device are communicatively connected with the control server. The control server is configured to: classify products to be stored of a storage task into a first type of product to be stored and a second type of product to be stored according to a preset product classification rule, split the storage task into a first subtask and a second subtask, dispatch the first subtask to the first workstation located in the first storage area, and send a first handling instruction to the first inventory receptacle handling device, and dispatch the second subtask to the second workstation located in the second storage area, and send a second handling instruction to the second inventory receptacle handling device. The first inventory receptacle handling device is configured to, when the first subtask is dispatched to the first workstation of the first storage area, transport a specified first inventory receptacle from the first storage area to the first workstation in response to the first handling instruction. The second inventory receptacle handling device is configured to, when the second subtask is dispatched to the second workstation of the second storage area, transport a specified second inventory receptacle from the second storage area to the second workstation in response to the second handling instruction.

Optionally, the control server is further configured to send a third handling instruction to the first inventory receptacle handling device after the first subtask is completed, and send a fourth handling instruction to the second inventory receptacle handling device after the second subtask is completed. The first inventory receptacle handling device is further configured to transport the specified first inventory receptacle from the first workstation to a specified location of the first storage area in response to the third handling instruction. The second inventory receptacle handling device is further configured to transport the specified second inventory receptacle from the second workstation to a specified location of the second storage area in response to the fourth handling instruction.

Optionally, the control server is further configured to classify the products to be stored into the first type of product to be stored and the second type of product to be stored according to at least one selected from shape information, popularity information, relevance information of the products or any combination thereof.

In a fifth aspect of embodiments of the present invention, a warehouse management system is provided, including:
performing, by a control server, operations of:
when it is determined that order products in an order task are to be selected from both a first inventory receptacle in a first storage area and a second inventory receptacle in a second storage area, splitting the order task into a first sub-order and a second sub-order according to the order task,
dispatching the first sub-order to a first workstation located in the first storage area, and sending a first handling instruction to a first inventory receptacle handling device,
dispatching the second sub-order to a second workstation located in the second storage area, and sending a second handling instruction to a second inventory receptacle handling device, and
sending a third handling instruction to an order receptacle handling device after determining that a selecting task corresponding to one sub-order of the two sub-orders is completed;
transporting, by the first inventory receptacle handling device, a specified first inventory receptacle from the first storage area to the first workstation in response to the first handling instruction when the first sub-order is dispatched to the first workstation in the first storage area;
transporting, by the second inventory receptacle handling device, a specified second inventory receptacle from the second storage area to the second workstation when the second sub-order is dispatched to the second workstation in the second storage area in response to the second handling instruction; and
transporting, by the order receptacle handling device, an order receptacle containing a product selected at the first workstation to the second workstation or an order receptacle containing a product selected at the second workstation to the first workstation in response to the third handling instruction.

Optionally, the first inventory receptacle is a movable inventory shelf, and the first inventory receptacle handling device is a shelf handling robot. The shelf handling robot is configured to transport a specified movable inventory shelf from the first storage area to the first workstation in response to the first handling instruction.

Optionally, the second inventory receptacle is an inventory tote, and the second inventory receptacle handling device is a tote handling robot. The tote handling robot is configured to transport a specified inventory tote from the second storage area to the second workstation in response to the second handling instruction.

Optionally, the order receptacle is a movable order shelf, an order tote, or an order shelf provided with an order tote. The order receptacle handling device is the shelf handling robot or the tote handling robot. The shelf handling robot is configured to transport the movable order shelf selected at the first workstation to the second workstation. The tote handling robot is configured to transport the order tote selected at the second workstation to the first workstation.

In a sixth aspect of embodiments of the present invention, a warehouse management system is provided, including:
performing, by a control server, operations of:
when it is determined that order products in an order task are to be selected from both a first inventory receptacle in a first storage area and a second inventory receptacle in a second storage area, splitting the order task into a first sub-order and a second sub-order according to the order task,
dispatching the first sub-order to a first workstation located in the first storage area, and sending a first handling instruction to a first inventory receptacle handling device,
dispatching the second sub-order to a second workstation located in the second storage area, and sending a second handling instruction to a second inventory receptacle handling device, and
sending a third handling instruction to an order receptacle handling device after determining that a selecting task corresponding to one sub-order of the two sub-orders is completed;
transporting, by the first inventory receptacle handling device, a specified first inventory receptacle from the first storage area to the first workstation in response to the first handling instruction when the first sub-order is dispatched to the first workstation in the first storage area;
transporting, by the second inventory receptacle handling device, a specified second inventory receptacle from the second storage area to the second workstation in response to the second handling instruction when the second sub-order is dispatched to the second workstation in the second storage area; and
transporting, by the order receptacle handling device, an order receptacle containing a product selected at the first workstation and an order receptacle containing a product selected at the second workstation to a specified confluence location to complete order consolidation in response to the third handling instruction.

Optionally, the first inventory receptacle is a movable inventory shelf, and the first inventory receptacle handling device is a shelf handling robot. The shelf handling robot is configured to transport a specified movable inventory shelf from the first storage area to the first workstation in response to the first handling instruction.

Optionally, the second inventory receptacle is an inventory tote, and the second inventory receptacle handling device is a tote handling robot. The tote handling robot is configured to transport a specified inventory tote from the second storage area to the second workstation in response to the second handling instruction.

Optionally, the order receptacle is a movable order shelf, an order tote, or an order shelf provided with an order tote.

Optionally, the order receptacle handling device is the shelf handling robot or the tote handling robot.

Optionally, the shelf handling robot is configured to transport the movable order shelf selected at the first workstation to the specified confluence location to complete order consolidation. The tote handling robot is configured to transport the order tote selected at the second workstation to the specified confluence location to complete order consolidation.

In a seventh aspect of embodiments of the present invention, a warehouse management system is provided, including:
performing, by a control server, operations of: when it is determined that products in an inventory task are to be selected from both a first inventory receptacle in a first storage area and a second inventory receptacle in a second storage area, dispatching the inventory task to a workstation, sending a first handling instruction to a first inventory receptacle handling device, and sending a second handling instruction to a second inventory receptacle handling device according to the inventory task;
transporting, by the first inventory receptacle handling device, a specified first inventory receptacle from the first storage area to the workstation in response to the first handling instruction; and
transporting, by the second inventory receptacle handling device, a specified second inventory receptacle from the second storage area to the workstation in response to the second handling instruction.

Optionally, the inventory task includes at least one selected from a storage task, an order task or a combination thereof.

In an eighth aspect of embodiments of the present invention, a warehouse management system is provided, including:
performing, by a control server, operations of:
classifying products to be stored of a storage task into first type of product to be stored and second type of product to be stored according to a preset product classification rule,
splitting the storage task into a first subtask and a second subtask,
dispatching the first subtask to a first workstation located in a first storage area, and sending a first handling instruction to a first inventory receptacle handling device, and
dispatching the second subtask to a second workstation located in a second storage area, and sending a second handling instruction to a second inventory receptacle handling device;
transporting, by the first inventory receptacle handling device, a specified first inventory receptacle from the first storage area to the first workstation in respond to the first handling instruction when the first subtask is dispatched to the first workstation of the first storage area; and
transporting, by the second inventory receptacle handling device, a specified second inventory receptacle from the second storage area to the second workstation in respond to the second handling instruction when the second subtask is dispatched to the second workstation of the second storage area.

Optionally, the control server is configured to send a third handling instruction to the first inventory receptacle handling device after the first subtask is completed, and send a fourth handling instruction to the second inventory receptacle handling device after the second subtask is completed. The first inventory receptacle handling device is configured to transport the specified first inventory receptacle from the first workstation to a specified location of the first storage area in response to the third handling instruction. The second inventory receptacle handling device is configured to transport the specified second inventory receptacle from the second workstation to a specified location of the second storage area in response to the fourth handling instruction.

Optionally, the control server is configured to classify the products to be stored into the first type of product to be stored and the second type of product to be stored according to at least one selected from shape information, popularity information, relevance information of the products or any combination thereof.

In the warehouse management systems provided in the embodiments, a storage area is divided into the first storage area and the second storage area. When the products in the order task are located in the first storage area and the second storage area, the inventory receptacles in the first storage area and the second storage area are transported to the workstation for selecting and picking the products, avoiding the danger caused by the complexity of routes of people and machines, and effectively improving the efficiency of the warehouse management system.

### BRIEF DESCRIPTION OF THE DRAWINGS

FIG. 1 is a schematic diagram of a warehouse management system provided in embodiments of the present invention;
FIG. 2 is a schematic diagram of a warehouse management system provided other embodiments of the present invention;
FIG. 3 is a schematic diagram of a warehouse management system provided in further embodiments of the present invention;
FIG. 4 is a flow chart of a warehouse management method provided in Example 7 of the present invention;
FIG. 5 is a flow chart of a warehouse management method provided in Example 8 of the present invention;
FIG. 6 is a flow chart of a warehouse management method provided in Example 9 of the present invention;
FIG. 7 is a flow chart of a warehouse management method provided in Example 10 of the present invention.

### DETAILED DESCRIPTION

In the following description, numerous specific details are set forth in order to provide a thorough understanding of the disclosure. However, the present invention can be implemented in many other ways different from those described here, and those skilled in the art can make similar promotions without violating the connotation of the present invention. Therefore, the present invention is not limited by the specific implementations disclosed below.

Terms used in one or more embodiments of the present invention are only for the purpose of describing specific embodiments, but should not be construed to limit one or more embodiments of the present invention. As used in the embodiments of the present invention and the appended claims, "a/an", "said" and "the" in singular forms are intended to include plural forms, unless clearly indicated in the context otherwise. It should also be understood that, the term "and/or" used in one or more embodiments of the present invention represents and contains any or all possible combinations of one or more associated listed items.

It should be understood that, although terms such as "first," "second" and others may be used in one or more embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of one or more embodiments of the present invention. As used herein, the term "if' may be construed to mean "when" or "upon" or "in response to determining" depending on the context.

In the present invention, a warehouse management system and method are provided, which will be described in detail in the following embodiments.

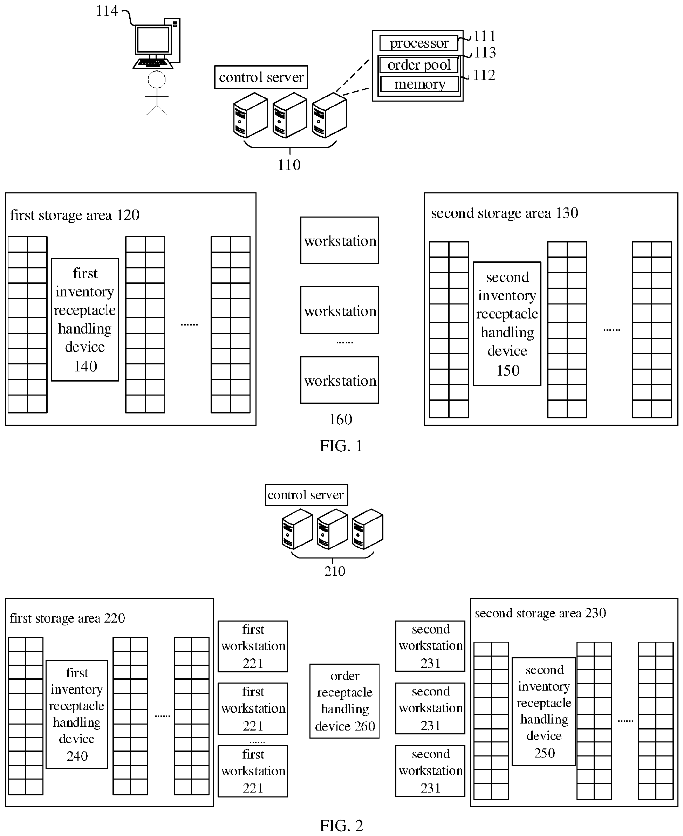

FIG. 1 shows a schematic diagram of a warehouse management system provided in an embodiment of the present invention. The system includes: a control server 110, a first storage area 120, a second storage area 130, a first inventory receptacle handling device 140, a second inventory receptacle handling device 150 and a workstation 160. A first inventory receptacle is arranged in the first storage area 120, and a second inventory receptacle is arranged in the second storage area 130.

The control server 110 is wirelessly communicatively connected with the first inventory receptacle handling device 140 and/or the second inventory receptacle handling device 150, and the staff operates the control server 110 through an operation console 114. The control server 110 is a software system running on a server, having a data storage and information processing capability, and can be connected with software system(s) of the first inventory receptacle handling device 140, the second inventory receptacle handling device 150 and the workstation 160 by wireless. The control server 110 may include one or more servers, and may be a centralized control architecture or a distributed computing architecture. The control server 110 has a processor 111 and a memory 112, in which the memory 112 may have an order pool 113, and order information is stored in the order pool 113.

The workstation 160 is a manual selecting area. After products are transported to the workstation 160, a staff or a robotic arm at the workstation will place a product to be stored in a corresponding inventory receptacle or put a product of an inventory receptacle into an order receptacle according to an inventory task.

The first storage area 120 and the second storage area 130 can be an intensive storage area, also can be a non-intensive storage area. The first storage area 120 has a plurality of first inventory receptacles, and the second storage area 130 has a plurality of second inventory receptacles. The first inventory receptacle handling device 140 is operated in the first storage area 120, which is configured to transport the first inventory receptacle in the first storage area 120, and the second inventory receptacle handling device 150 is operated in the second storage area 130, which is configured to transport the second inventory receptacle in the second storage area 130. It should be noted that, in practical applications, the first storage area 120 may be a movable inventory shelf storage area or an inventory tote storage area, the second storage area 130 may be a movable inventory shelf storage area or an inventory tote storage area, and storage types of the first storage area 120 and the second storage area 130 are different. If the first storage area 120 is the movable inventory shelf storage area, then the second storage area 130 is the inventory tote storage area. Accordingly, the first inventory receptacle is a movable inventory shelf, and the second inventory receptacle is an inventory tote. If the first storage area 120 is the inventory tote storage area, then the second storage area 130 is the movable inventory shelf storage area. Accordingly, the first inventory receptacle is the inventory tote, and the second inventory receptacle is the movable inventory shelf.

The first inventory receptacle handling device 140, under a control of the control server 110, executes tasks of taking out, transporting, and depositing the first inventory receptacle. When the first storage area is the movable inventory shelf storage area, the first inventory receptacle handling device 140 is a shelf handling device, and the shelf handling device may be a shelf handling robot. When the first storage area is the inventory tote storage area, the first inventory receptacle handling device 140 is a tote handling device, and the tote handling device may be a tote handling robot.

The second inventory receptacle handling device 150, under a control of the control server 110, executes tasks of taking out, transporting, and depositing the second inventory receptacle. When the second storage area is the movable inventory shelf storage area, the second inventory receptacle handling device 150 is a shelf handling device, and the shelf handling device may be a shelf handling robot. When the second storage area is the inventory tote storage area, the second inventory receptacle handling device 150 is a tote handling device, and the tote handling device may be a tote handling robot.

### Example 1

In Example 1 of the present invention, the first storage area 120 is a movable inventory shelf storage area and the second storage area 130 is an inventory tote storage area, and the first inventory receptacle handling device 140 is a shelf handling robot and the second inventory receptacle handling device 150 is a tote handling robot accordingly.

The control server 110 determines a target inventory shelf 121 in the inventory shelf storage area 120, a target inventory tote 131 in the inventory tote storage area 130, the shelf handling robot 140 configured to transport the target inventory shelf 121, and the tote handling robot 150 configured to transport the target tote 131 according to an order task. The control server 110 sends a first handling instruction to the shelf handling robot 140, sends a second handling instruction to the tote handling robot 150, and sends the order task to the workstation 160.

The shelf handling robot 140 is configured to transport the target inventory shelf 121 from the inventory shelf storage area 120 to the workstation 160 in response to a first handling instruction.

The tote handling robot 150 is configured to transport the target tote 131 from the inventory tote storage area 130 to the workstation 160 in response to a second handling instruction.

The workstation 160 is configured to select products from the target inventory shelf 121 and the target inventory tote 131 and put them into an order receptacle in response to the order task. The specific selecting method may be a manual selecting, or a robotic arm selecting.

The warehouse management system provided in this example of the present invention divides a storage area into the first storage area and the second storage area. When the products in the order task are located in the first storage area and the second storage area, the inventory receptacles in the first storage area and the second storage area are transported to the workstation for selecting and picking the products, avoiding the danger caused by the complexity of routes of people and machines, and effectively improving the efficiency of the warehouse management system.

Optionally, the control server is further configured to, in the case that the inventory task is the storage task, classify products to be stored into a first type of product to be stored of the first storage area and a second type of product to be stored of the second storage area according to a preset product classification rule, split the storage task into a first subtask for storing the first type of product to be stored and a second subtask for storing the second type of product to be stored, and dispatch the first subtask and the second subtask to the workstation.

Optionally, the control server is further configured to classify the products to be stored into the first type of product to be stored and the second type of product to be stored according to at least one selected from shape information, popularity information, relevance information of the products or any combination thereof.

There are many kinds of preset product classification rules. For example, the first type of product to be stored refers to a product that needs to be placed on the shelf, and the second type of product to be stored refers to a product that needs to be placed in the tote. A product with an irregular shape or a product exceeded a size of the tote may be classified as the first type of product to be put on the shelf, and a product fitted in the size of the tote and a product with a regular shape is classified as the second type of product to be put in the tote. According to an order popularity of the products, a product with a popularity greater than a preset threshold is classified as the first type of product to be stored, and a product with a popularity less than or equal to the preset threshold is classified as the second type of product to be stored. According to a relevance of the products, a product with a relevance greater than a preset threshold is classified as the first type of product to be stored, and a product with a relevance less than the preset threshold is classified as the second type of product to be stored.

At the workstation, the first type of product to be stored is stored in the first inventory receptacle, and the second type of product to be stored is stored in the second inventory receptacle. The first type of product to be stored is linked to the first inventory receptacle, and the second type of product to be stored is linked to the second inventory receptacle.

### Example 2

In Example 2 of the present invention, the first storage area 120 is a movable inventory shelf storage area and the second storage area 130 is an inventory tote storage area, and the first inventory receptacle handling device 140 is a shelf handling robot and the second inventory receptacle handling device 150 is a tote handling robot accordingly.

The control server 110 classifies products to be stored of a storage task into a first type of product to be stored and a second type of product to be stored according to a preset product classification rule, splits the storage task into a first subtask and a second subtask, dispatches the first subtask and the second subtask to the workstation 160. The control server 110 determines a target inventory shelf 121 in the inventory shelf storage area 120 and a target inventory tote 131 in the inventory tote storage area 130, the shelf handling robot 140 configured to transport the target inventory shelf 121, and the tote handling robot 150 configured to transport the target tote 131. The control server 110 sends a first handling instruction to the shelf handling robot 140, and sends a second handling instruction to the tote handling robot 150.

The shelf handling robot 140 is configured to transport the target inventory shelf 121 from the inventory shelf storage area 120 to the workstation 160 in response to the first handling instruction.

The tote handling robot 150 is configured to transport the target inventory tote 131 from the inventory tote storage area 130 to the workstation 160 in response to the second handling instruction.

The workstation 160 is configured to place the first type of product to be stored in the shelf handling robot 140 according to the first subtask, and place the second type of product to be stored in the tote handling robot 150 according to the second subtask. The specific selecting method can be a manual selecting, or a robotic arm selecting.

Referring to FIG. 2, FIG. 2 shows a schematic diagram of a warehouse management system provided in other embodiments of the present invention. The system includes: a control server 210, a first storage area 220, a second storage area 230, a first workstation 221 corresponding to the first storage area, a second workstation 231 corresponding to the second storage area, a first inventory receptacle handling device 240 operated in the first storage area 220, a second inventory receptacle handling device 250 operated in the second storage area 230, and an order receptacle handling device 260 configured to transport an order receptacle between the first workstation and the second workstation.

The first storage area 220 and the second storage area 230 may be an intensive storage area or a non-intensive storage area. The first storage area 220 has a plurality of first inventory receptacles, and the second storage area 230 has a plurality of second inventory receptacles. The first inventory receptacle handling device 240 is operated in the first storage area 220, which is configured to transport the first inventory receptacle in the first storage area 220, and the second inventory receptacle handling device 250 is operated in the second storage area 230, which is configured to transport the second inventory receptacle in the second storage area 230. It should be noted that, in practical applications, the first storage area 220 may be a movable inventory shelf storage area or an inventory tote storage area, the second storage area 230 may be an inventory tote storage area or a movable inventory shelf storage area, and storage types of the first storage area 220 and the second storage area 230 are different. If the first storage area 220 is the movable inventory shelf storage area, then the second storage area 230 is the inventory tote storage area, and the first inventory receptacle is an inventory shelf and the second inventory receptacle is an inventory tote accordingly. If the first storage area 220 is the inventory tote storage area, then the second storage area 230 is the movable inventory shelf storage area, and the first inventory receptacle is the inventory tote and the second inventory receptacle is the inventory shelf accordingly.

The control server 210 is configured to: when it is determined that order products in an order task are to be selected from both the first inventory receptacle in the first storage area and the second inventory receptacle in the second storage area, split the order task into a first sub-order and a second sub-order according to the order task; dispatch the first sub-order to the first workstation 221 located in the first storage area, dispatch the second sub-order to the second workstation 231 located in the second storage area; and send a first handling instruction to the first inventory receptacle handling device 240, send a second handling instruction to the second inventory receptacle handling device 250, and send a third handling instruction to the order receptacle handling device 260.

The first inventory receptacle handling device 240 is configured to, when the first sub-order is dispatched to the first workstation 221 in the first storage area, transport the first inventory receptacle from the first storage area 220 to the first workstation 221 in response to the first handling instruction. When the first inventory receptacle is the inventory shelf, the first inventory receptacle handling device 240 is the shelf handling device, for example the shelf handling robot. When the first inventory receptacle is the inventory tote, the first inventory receptacle handling device 240 is the tote handling device, for example, the tote handling robot.

The second inventory receptacle handling device 250 is configured to, when the second sub-order is dispatched to the second workstation 231 in the second storage area, transport a specified second inventory receptacle from the second storage area 230 to the second workstation 231 in response to the second handling instruction. When the second inventory receptacle is the inventory shelf, the second inventory receptacle handling device 250 is the shelf handling device, for example, the shelf handling robot. When the second inventory receptacle is the inventory tote, the second inventory receptacle handling device 250 is the tote handling device, for example, the tote handling robot.

In a specific embodiment provided by the disclosure, the first sub-order is executed at a first workstation 221, and a product in the first inventory receptacle is selected and put into the order receptacle. After the first sub-order is executed, the order receptacle handling device 260, in response to the third handling instruction, transports the order receptacle located at the first workstation 221 to the second workstation 231. The second sub-order is executed at the second workstation 231, and a product in the second inventory receptacle is selected and put into the order receptacle.

In another specific embodiment provided by the disclosure, the second sub-order is executed at the second workstation 231, and the product in the second inventory receptacle is selected and put into the order receptacle. After the second sub-order is executed, the order receptacle handling device 260, in response to the third handling instruction, transports the order receptacle located at the second workstation 231 to the first workstation 221. The first sub-order is executed at the first workstation 221, and the product in the first inventory receptacle is selected and put into the order receptacle.

It should be noted that the order receptacle may be a movable order shelf, or an order tote located on the order shelf. When the order receptacle is the order shelf, the order receptacle handling device is a shelf handling robot. When the order receptacle is the order tote, the order receptacle handling device is a tote handling robot.

It should be noted that, storage types of receptacles of the first storage area 220 and the second storage area 230 are different. If the first storage area 220 is the movable inventory shelf storage area, then the second storage area 230 is the inventory tote storage area. Accordingly, the first inventory receptacle is the inventory shelf, the first inventory receptacle handling device is the shelf handling device, the second inventory receptacle is the inventory tote, and the second inventory receptacle handling device is the tote handling device. If the first storage area 220 is the inventory tote storage area, then the second storage area 230 is the movable inventory shelf storage area. Accordingly, the first inventory receptacle is the inventory tote, the first inventory receptacle handling device is the tote handling device, the second target receptacle is the inventory shelf, and the second inventory receptacle handling device is the shelf handling device. The above-mentioned shelf handling device may be the shelf handling robot, and the tote handling device may be the tote handling robot.

In practical applications, the shelf handling robot, the tote handling robot and the order tote handling robot can execute operations of storing, taking out, transporting the shelf, the tote and the order tote according to the instructions sent by the control server, and can use one or more navigation methods or a combination thereof, such as two-dimensional codes, simultaneous localization and mapping (SLAM), and other navigation methods or an integration thereof. The robot includes at least one downward camera, it can move forward according to the two-dimensional code information (or other ground marks) captured by the downward camera when navigating through the two-dimensional code marks.

### Example 3

In Example 3 of the present invention, the first storage area 220 is a movable inventory shelf storage area and the second storage area 230 is an inventory tote storage area, and the first inventory receptacle handling device 240 is a shelf handling robot and the second inventory receptacle handling device 250 is a tote handling robot accordingly. The order receptacle is an order tote, and the order receptacle handling device is a tote handling robot.

The control server 210 is configured to:
when it is determined that order products in an order task are to be selected from both an inventory shelf in the inventory shelf storage area and an inventory tote in the inventory tote storage area, split the order task into a first sub-order and a second sub-order according to the order task,
dispatch the first sub-order to a first workstation located in the inventory shelf storage area, and dispatch the second sub-order to a second workstation located in the inventory tote storage area, and
send a first handling instruction to the shelf handling robot 240, send a second handling instruction to the tote handling robot 250, and send a third handling instruction to the tote handling robot 260.

The tote handling robot 250 receives the second handling instruction, and transports a specified inventory tote to the second workstation in response to the second handling instruction. At the second workstation, a selecting task of the second sub-order is executed, and a product in the inventory tote is selected and put into the order tote until the selecting of the second sub-order is completed.

The tote handling robot 260 receives the third handling instruction, and after the selecting of the second sub-order is completed, transports the order tote from the second workstation to the first workstation in response to the third handling instruction.

The shelf handling robot 240 receives the first handling instruction, and transports a specified inventory shelf to the first workstation in response to the first handling instruction. After the tote handling robot 260 transports the order tote to the first workstation, the selecting task of the first sub-order is executed, and a product in the inventory shelf is selected and put into the order tote until the selecting of the first sub-order is completed.

The whole order task is completed, and the tote handling robot 260 transports the order tote to a specified location for packaging.

### Example 4

In Example 4 of the present invention, the first storage area 220 is a movable inventory shelf storage area and the second storage area 230 is an inventory tote storage area, and the first inventory receptacle handling device 240 is a shelf handling robot and the second inventory receptacle handling device 250 is a tote handling robot accordingly. The order receptacle is an order shelf, and an order receptacle handling device is a shelf handling robot.

The control server 210 is configured to:
when it is determined that order products in an order task are to be selected from both an inventory shelf in the inventory shelf storage area and an inventory tote in the inventory tote storage area, split the order task into a first sub-order and a second sub-order according to the order task,
dispatch the first sub-order to a first workstation located in the inventory shelf storage area, and dispatch the second sub-order to a second workstation located in the inventory tote storage area, and
send a first handling instruction to the shelf handling robot 240, send a second handling instruction to the tote handling robot 250, and send a third handling instruction to the shelf handling robot 260.

The shelf handling robot 240 receives the first handling instruction, and transports a specified inventory shelf to the first workstation in response to the first handling instruction. A selecting task of the first sub-order is executed, and a product in the inventory shelf is selected and put into the order shelf until the selecting of the first sub-order is completed.

The shelf handling robot 260 receives the third handling instruction, and after the selecting of the first sub-order is completed, transports the order shelf from the first workstation to the second workstation in response to the third handling instruction.

The tote handling robot 250 receives the second handling instruction, and transports a specified inventory tote to the second workstation in response to the second handling instruction. After the shelf handling robot 260 transports the order shelf to the second workstation, a product selecting of the second sub-order is executed, and a product in the inventory tote is selected and put into the order shelf until the selecting of the second sub-order is completed.

The whole order task is completed, and the shelf handling robot 260 transports the order shelf to a specified location for packaging.

In the warehouse management systems provided by Example 3 and Example 4, the products in the order request are located in the first storage area and the second storage area, the order request is split into two order subtasks by the control server. The first order subtask is executed at the first workstation corresponding to the first storage area, and then the order receptacle is moved by the order receptacle handling device to the second workstation to execute the second order subtask. Alternatively, the second order subtask is executed at the second workstation corresponding to the second storage area, and then the order receptacle is moved by the order receptacle handling device to the first workstation to execute the first order subtask. Further, by a way of order relay, a hit rate of the order request is improved based on the cooperation among the first inventory receptacle handling device, the second inventory receptacle handling device and the order receptacle handling device, thus avoiding the danger caused by the complexity of routes of people and machines, and effectively improving the efficiency of the warehouse management.

### Example 5

In Example 5 of the present invention, the first storage area 220 is a movable inventory shelf storage area and the second storage area 230 is an inventory tote storage area, and the first inventory receptacle handling device 240 is a shelf handling robot and a second inventory receptacle handling device 250 is a tote handling robot accordingly.

The control server 210 classifies products to be stored of a storage task into a first type of product to be stored and a second type of product to be stored according to a preset product classification rule, splits the storage task into a first subtask and a second subtask, dispatches the first subtask to a first workstation 221 located in a first storage area 220 and dispatches the second subtask to a second workstation 231 located in a second storage area 230, and sends a first handling instruction to the shelf handling robot 240 and sends a second handling instruction to the tote handling robot 250.

The shelf handling robot 240 transports a specified inventory shelf to the first workstation 221 in response to the first handling instruction, executes the storage task of the product at the first workstation 221, and places the first type of product to be stored in the inventory shelf.

The tote handling robot 250 transports a specified inventory tote to the second workstation 231 in response to the second handling instruction, executes the storage task of the product at the second workstation 231, and places the second type of product to be stored in the inventory tote.

It should be noted that, in the processes of placing the first type of product to be stored in the inventory shelf at the first workstation 221 and placing the second type of product to be stored in the inventory tote at the second workstation 231, a specific product selecting method may be a manual selecting, or a robotic arm selecting.

In the warehouse management system provided by Example 5 of the present invention, the products to be stored are classified into the first type of product to be stored and the second type of product to be stored. The first storage area is correspondingly provided with the first workstation, the second storage area is correspondingly provided with the second workstation, the first type of product to be stored are transported to the first workstation, and the second type of product to be stored are transported to the second workstation. The first inventory receptacle handling device is controlled to transport an empty first inventory receptacle to the first workstation, and the second inventory receptacle handling device is controlled to transport an empty second inventory receptacle to the second workstation through the control server. The storage task of the first type of product to be stored is performed at the first workstation, the storage task of the second type of product to be stored is performed at the second workstation. The products are classified according to the preset product classification rule, and the classified products are stored on the corresponding receptacles, which improves the efficiency of storing the products.

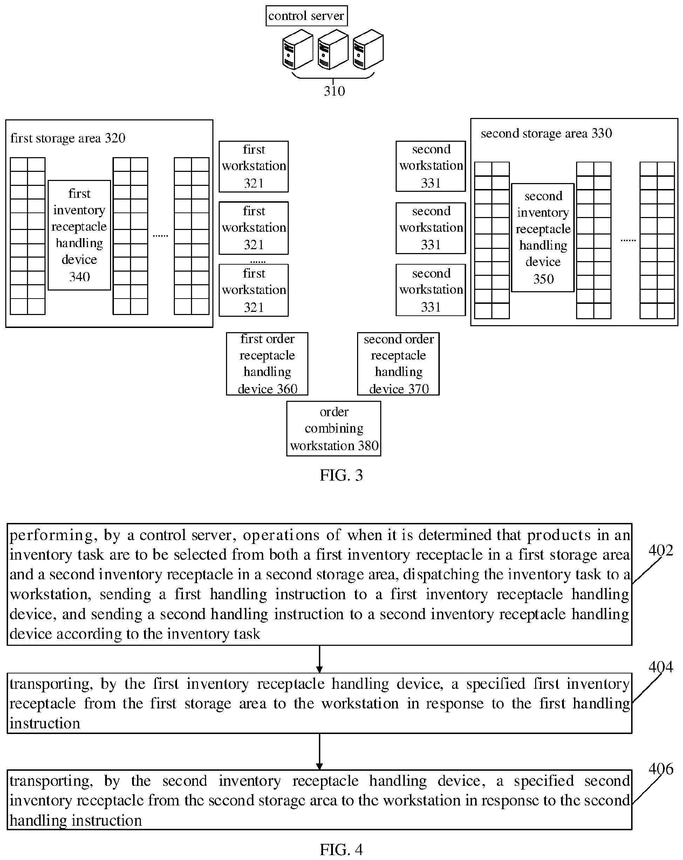

Referring to FIG. 3, FIG. 3 shows a schematic diagram of a warehouse management system provided further embodiments of the present invention. The system includes: a control server 310, a first storage area 320, a second storage area 330, a first workstation 321 located in the first storage area, a second workstation 331 located in the second storage area, a first inventory receptacle handling device 340 operated in the first storage area 320, a second inventory receptacle handling device 350 operated in the second storage area 330, a first order receptacle handling device 360 configured to transport a first order receptacle in the first workstation 321, a second order receptacle handling device 370 configured to transport a second order receptacle in the second workstation 331 and an order combining workstation 380 configured to combine products of the first order receptacle and the second order receptacle. The first order receptacle and the second order receptacle may be collectively referred to as the order receptacle.

The control server 310 is configured to:
when it is determined that order products in an order task are to be selected from both the first inventory receptacle in the first storage area 320 and the second inventory receptacle in the second storage area 330, split the order task into a first sub-order and a second sub-order according to the order task,
dispatch the first sub-order to the first workstation 321 located in the first storage area 320, dispatch the second sub-order to the second workstation 331 located in the second storage area 330, and
send a first handling instruction to the first inventory receptacle handling device 340, send a second handling instruction to the second inventory receptacle handling device 350, and send a third handling instruction to the first order receptacle handling device 360 and the second order receptacle handling device 370.

The first inventory receptacle handling device 340 is configured to transport the first inventory receptacle from the first storage area 320 to the first workstation 321 in response to the first handling instruction. The first sub-order is executed at the first workstation 321, and a product in the first inventory receptacle is selected and put into the first order receptacle.

The second inventory receptacle handling device 350 is configured to transport the second inventory receptacle from the second storage area 330 to the second workstation 331 in response to the second handling instruction. The second sub-order is executed at the second workstation 331, and a product in the second inventory receptacle is selected and put into the second order receptacle.

The first order receptacle handling device 360 transports the first order receptacle containing a product selected at the first workstation 321 to the order combining workstation 380 in response to the third handling instruction. The second order receptacle handling device 370 transports the second order receptacle containing a product selected at the second workstation 331 to the order combining workstation 380 in response to the third handling instruction.

At the order combining workstation 380, the products in the first order receptacle and the second order receptacle are packaged and consolidated after both the first order receptacle and the second order receptacle arrive at the order combining workstation 380.

### Example 6

In Example 6 of the present invention, the first storage area 320 is an inventory tote storage area and the second storage area 330 is a movable inventory shelf storage area. Accordingly, the first inventory receptacle handling device 340 is a tote handling robot, the first inventory receptacle is an inventory tote, the second inventory receptacle handling device 350 is a shelf handling robot, and the second inventory receptacle is an inventory shelf. The first order receptacle is an order tote, and the second order receptacle is an order shelf. Correspondingly, the first order receptacle handling device 360 is a tote handling robot, and the second order receptacle handling device 370 is a shelf handling robot.

The control server 320 is configured to:
split an order task into a first sub-order and a second sub-order according to the order task,
dispatch the first sub-order to a first workstation 321, and dispatch the second sub-order to a second workstation 331, and
send a first handling instruction to the tote handling robot 340, send a second handling instruction to the shelf handling robot 350, and send a third handling instruction to the tote handling robot 360 and the shelf handling robot 370.

The tote handling robot 340 is configured to, in response to the first handling instruction, transport a specified inventory tote from the inventory tote storage area 320 to the first workstation 321. The first sub-order is executed at the first workstation 321, and a product in the inventory tote is selected and put into the order tote until the selecting of the first sub-order is completed.

The shelf handling robot 350 is configured to, in response to the second handling instruction, transport a specified inventory shelf from the inventory shelf storage area 330 to the second workstation 331. The second sub-order is executed at the second workstation 331, and a product in the inventory shelf is selected and put into the order shelf until the selecting of the second sub-order is completed.

The tote handling robot 360 transports the order tote containing product(s) selected at the first workstation 321 to the order combining workstation 380 in response to the third handling instruction. The shelf handling robot 370 transports the order shelf containing product(s) selected at the second workstation 331 to the order combining workstation 380 in response to the third handling instruction.

At the order combining workstation 380, the products in the order tote and the order shelf are packaged and consolidated after both the order tote and the order shelf arrive at the order combining workstation 380.

In the warehouse management system provided in this example, the products in the order task are to be selected from both the first inventory receptacle in the first storage area and the second inventory receptacle in the second storage area, the order task is split into two sub-order by the control server. The first sub-order is executed at the first target workstation corresponding to the first storage area, the second sub-order is executed at the second target workstation corresponding to the second storage area, and the first order receptacle corresponding to the first target workstation and the second order receptacle corresponding to the second target workstation are transported to the order combining workstation. The products in the two order receptacles are combined to perform a final selecting process. The hit rate of the order request is improved by the cooperation among the first inventory receptacle handling device, the second inventory receptacle handling device, the first order receptacle handling device, and the second order receptacle handling device, thus avoiding the danger caused by the complexity of routes of people and machines, and effectively improving the efficiency of the warehouse management.

### Example 7

FIG. 4 shows a flow chart of a warehouse management method provided in embodiments of the present invention. A scene where the method is applied at least includes a workstation, a first storage area and a second storage area, in which the first storage area and the second storage area are configured to store inventory receptacles of different types. The inventory receptacle may be a shelf, a tray or a tote, in which the pallet or the tote may be placed on the shelf. The warehouse management method includes the following steps.

In block 402, when it is determined that products in an inventory task are to be selected from both a first inventory receptacle in the first storage area and a second inventory receptacle in the second storage area, operations of dispatching the inventory task to a workstation, sending a first handling instruction to a first inventory receptacle handling device, and sending a second handling instruction to a second inventory receptacle handling device according to the inventory task are performed by the control server.

In block 404, a specified first inventory receptacle is transported, by the first inventory receptacle handling device, from the first storage area to the workstation in response to the first handling instruction.

In block 406, a specified second inventory receptacle is transported, by the second inventory receptacle handling device, from the second storage area to the workstation in response to the second handling instruction.

Optionally, the inventory task includes at least one selected from a storage task, an order task or a combination thereof.

The warehouse management method provided in the embodiments of the present invention divides a storage area into the first storage area and the second storage area. When the products in the order task are located in the first storage area and the second storage area, the inventory receptacles in the first storage area and the second storage area are transported to the workstation for selecting and picking the products, thus avoiding the danger caused by the complexity of routes of people and machines, and effectively improving the efficiency of the warehouse management system.

### Example 8

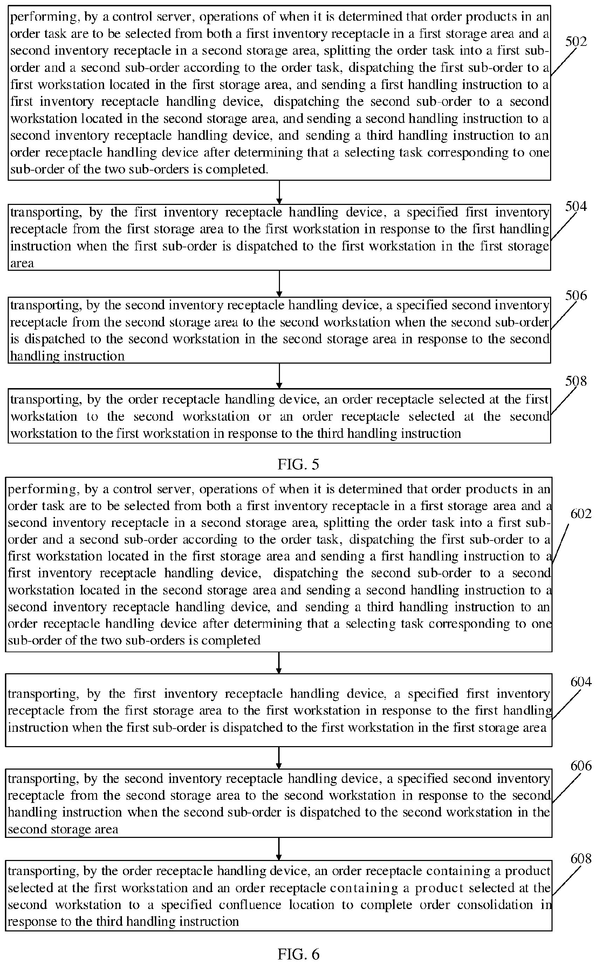

FIG. 5 shows a flow chart of a warehouse management method provided in embodiments of the present invention. A scene where the method is applied at least includes a first workstation, a second workstation, a first storage area and a second storage area, in which the first storage area and the second storage area are configured to store inventory receptacles of different types. The inventory receptacle may be a shelf, a tray or a tote, in which the tray or the tote may be placed on the shelf. The warehouse management method includes the following steps.

In block 502, operations are performed by a control server, the operations including:
when it is determined that order products in an order task are to be selected from both a first inventory receptacle in the first storage area and a second inventory receptacle in the second storage area, splitting the order task into a first sub-order and a second sub-order according to the order task,
dispatching the first sub-order to the first workstation located in the first storage area, and sending a first handling instruction to a first inventory receptacle handling device,
dispatching the second sub-order to the second workstation located in the second storage area, and sending a second handling instruction to a second inventory receptacle handling device, and
sending a third handling instruction to an order receptacle handling device after determining that a selecting task corresponding to one sub-order of the two sub-orders is completed.

In block 504, a specified first inventory receptacle is transported, by the first inventory receptacle handling device, from the first storage area to the first workstation in response to the first handling instruction when the first sub-order is dispatched to the first workstation in the first storage area.

In block 506, a specified second inventory receptacle is transported, by the second inventory receptacle handling device, from the second storage area to the second workstation when the second sub-order is dispatched to the second workstation in the second storage area in response to the second handling instruction.

In block 508, an order receptacle containing a product selected at the first workstation is transported, by the order receptacle handling device, to the second workstation or an order receptacle containing a product selected at the second workstation is transported, by the order receptacle handling device, to the first workstation in response to the third handling instruction.

Optionally, the first inventory receptacle is a movable inventory shelf, and the first inventory receptacle handling device is a shelf handling robot. The shelf handling robot transports a specified movable inventory shelf from the first storage area to the first workstation in response to the first handling instruction.

Optionally, the second inventory receptacle is an inventory tote, and the second inventory receptacle handling device is a tote handling robot. The tote handling robot transports a specified inventory tote from the second storage area to the second workstation in response to the second handling instruction.

Optionally, the order receptacle is a movable order shelf, an order tote, or an order shelf provided with an order tote. The order receptacle handling device is the shelf handling robot or the tote handling robot. The shelf handling robot transports the movable order shelf containing a product selected at the first workstation to the second workstation, or the tote handling robot transports the order tote containing a product selected at the second workstation to the first workstation.

In the warehouse management method provided in the embodiments of the present invention, the products in the order request are located in the first storage area and the second storage area, the order request is split into two order subtasks by the control server. The first order subtask is executed at the first workstation corresponding to the first storage area, and then the order receptacle is moved by the order receptacle handling device to the second workstation to execute the second order subtask. Alternatively, the second order subtask is executed at the second workstation corresponding to the second storage area, and then the order receptacle is moved by the order receptacle handling device to the first workstation to execute the first order subtask. Further, by a way of order relay, a hit rate of the order request is improved based on the cooperation among the first inventory receptacle handling device, the second inventory receptacle handling device and the order receptacle handling device, thus avoiding the danger caused by the complexity of routes of people and machines, and effectively improving the efficiency of the warehouse management.

### Example 9

FIG. 6 shows a flow chart of a warehouse management method provided in embodiments of the present invention. A scene where the method is applied at least includes a first workstation, a second workstation, a first storage area and a second storage area, in which the first storage area and the second storage area are configured to store storage receptacles of different types. The storage receptacles may be a shelf, a tray or a tote, in which the tray or the tote may be placed on the shelf. The warehouse management method includes the following steps.

In block 602, operations are performed by a control server, the operations including:
when it is determined that order products in an order task are to be selected from both a first inventory receptacle in the first storage area and a second inventory receptacle in the second storage area, splitting the order task into a first sub-order and a second sub-order according to the order task,
dispatching the first sub-order to the first workstation located in the first storage area, and sending a first handling instruction to a first inventory receptacle handling device,
dispatching the second sub-order to the second workstation located in the second storage area, and sending a second handling instruction to a second inventory receptacle handling device, and
sending a third handling instruction to an order receptacle handling device after determining that a selecting task corresponding to one sub-order of the two sub-orders is completed.

In block 604, a specified first inventory receptacle is transported, by the first inventory receptacle handling device, from the first storage area to the first workstation in response to the first handling instruction when the first sub-order is dispatched to the first workstation in the first storage area.

In block 606, a specified second inventory receptacle is transported, by the second inventory receptacle handling device, from the second storage area to the second workstation in response to the second handling instruction when the second sub-order is dispatched to the second workstation in the second storage area.

In block 608, an order receptacle containing a product selected at the first workstation and an order receptacle containing a product selected at the second workstation are transported, by the order receptacle handling device, to a specified confluence location to complete order consolidation in response to the third handling instruction.

Optionally, the first inventory receptacle is a movable inventory shelf, and the first inventory receptacle handling device is a shelf handling robot. The shelf handling robot transports a specified movable inventory shelf from the first storage area to the first workstation in response to the first handling instruction.

Optionally, the second inventory receptacle is an inventory tote, and the second inventory receptacle handling device is a tote handling robot. The tote handling robot transports a specified inventory tote from the second storage area to the second workstation in response to the second handling instruction.

Optionally, the order receptacle is a movable order shelf, an order tote, or an order shelf provided with an order tote.

Optionally, the order receptacle handling device is the shelf handling robot or the tote handling robot.

Optionally, the shelf handling robot transports the movable order shelf containing a product selected at the first workstation to the specified confluence location to complete order consolidation, or the tote handling robot transports the order tote containing a product selected at the second workstation to the specified confluence location to complete order consolidation.

In the warehouse management method provided the embodiments, the products in the order task are to be selected from both the first inventory receptacle in the first storage area and the second inventory receptacle in the second storage area, the order task is split into two sub-order by the control server. The first sub-order is executed at the first target workstation corresponding to the first storage area, the second sub-order is executed at the second target workstation corresponding to the second storage area, and the first order receptacle corresponding to the first target workstation and the second order receptacle corresponding to the second target workstation are transported to the order combining workstation. The products in the two order receptacles are combined at the order combining workstation for the final selecting. The hit rate of the order request is improved by the cooperation among the first inventory receptacle handling device, the second inventory receptacle handling device, the first order receptacle handling device, and the second order receptacle handling device, thus avoiding the danger caused by the complexity of routes of people and machines, and effectively improving the efficiency of the warehouse management.

### Example 10

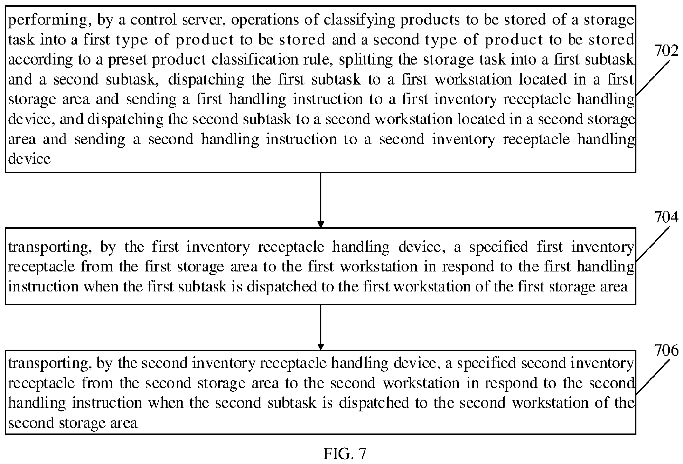

FIG. 7 shows a flow chart of a warehouse management method provided in embodiments of the present invention. A scene where the method is applied at least includes a first workstation, a second workstation, a first storage area and a second storage area, in which the first storage area and the second storage area are configured to store storage receptacles of different types. The storage receptacle may be a shelf, a tray, or a totes, in which the tray or the tote may be placed on the shelf. The warehouse management method includes the following steps.

In block 702, operations are performed by a control server, the operations including:
classifying products to be stored of a storage task into a first type of product to be stored and a second type of product to be stored according to a preset product classification rule,
splitting the storage task into a first subtask and a second subtask,
dispatching the first subtask to a first workstation located in the first storage area, and sending a first handling instruction to a first inventory receptacle handling device, and
dispatching the second subtask to the second workstation located in a second storage area, and sending a second handling instruction to a second inventory receptacle handling device.

In block 704, a specified first inventory receptacle is transported, by the first inventory receptacle handling device, from the first storage area to the first workstation in respond to the first handling instruction when the first subtask is dispatched to the first workstation of the first storage area.

In block 706: a specified second inventory receptacle is transported, by the second inventory receptacle handling device, from the second storage area to the second workstation in respond to the second handling instruction when the second subtask is dispatched to the second workstation of the second storage area.

Optionally, the control server is configured to send a third handling instruction to the first inventory receptacle handling device after the first subtask is completed, and send a fourth handling instruction to the second inventory receptacle handling device after the second subtask is completed. The first inventory receptacle handling device is configured to transport the specified first inventory receptacle from the first workstation to a specified location of the first storage area in response to the third handling instruction, and the second inventory receptacle handling device is configured to transport the specified second inventory receptacle from the second workstation to a specified location of the second storage area in response to the fourth handling instruction.

Optionally, the control server classifies the products to be stored into the first type of product to be stored and the second type of product to be stored according to at least one selected from shape information, popularity information, relevance information of the products or any combination thereof.

In the warehouse management method provided in the embodiments of the present invention, the products to be stored are classified into the first type of product to be stored and the second type of product to be stored. Correspondingly, the first storage area is provided with the first workstation, the second storage area is provided with the second workstation, the first type of product to be stored is transported to the first workstation, and the second type of product to be stored is transported to the second workstation. The first inventory receptacle handling device is controlled to transport an empty first inventory receptacle to the first workstation, and the second inventory receptacle handling device is controlled to transport an empty second inventory receptacle to the second workstation through the control server. The storage task of the first type of product to be stored is completed at the first workstation, the storage task of the second type of product to be stored is completed at the second workstation. The products are classified according to the preset product classification rule, and the classified products are stored in the corresponding receptacles, which improves the efficiency for storing the products.

Specific embodiments of the present invention are described above. Other embodiments are within the scope of the appended claims. In some cases, the operations or steps recited in the claims can be performed in a sequence different from that in the embodiments and still achieve desired results. In addition, the processes depicted in the accompanying drawings do not necessarily require the particular sequence or consecutive sequence shown to achieve the desired results. In some embodiments, multitasking and parallel processing may also be possible or may be advantageous.

It should be noted that, for the simplicity of description, the aforementioned method embodiments are expressed as a series of operations, but those skilled in the art should know that the present invention is not limited by the described operation sequence. Some steps/operations may be performed in other sequences or simultaneously in accordance with the present invention. Further, those skilled in the art should know that the embodiments described in the specification are all preferred embodiments, and the steps and modules involved are not necessarily required for the present invention.

In the above embodiments, description of each embodiment has its own focus, and what is not described in detail in one embodiment can be found in the relevant description of other embodiments.

The above-disclosed preferred embodiments of the present invention are used only to help illustrate the present invention. The optional embodiments are not an exhaustive recitation of all details, nor do they limit the invention to the specific embodiments described. Modifications and variations can be made according to the contents of the present invention. These embodiments have been selected and specifically described in the present invention to better explain the principles and practical applications of the present invention, so that those skilled in the art can well understand and utilize the present invention. The present invention is limited only by the claims in their full scopes and equivalents thereof.

## Claims

1. A warehouse management system, comprising: a control server, a first storage area, a second storage area, a first inventory receptacle handling device, a second inventory receptacle handling device and an order receptacle handling device, wherein a first inventory receptacle and a first workstation are arranged in the first storage area, a second inventory receptacle and a second workstation are arranged in the second storage area, and the first inventory receptacle handling device and the second inventory receptacle handling device are communicatively connected to the control server;
wherein the control server is configured to:
when it is determined that order products in an order task are to be selected from both the first inventory receptacle in the first storage area and the second inventory receptacle in the second storage area, split the order task into a first sub-order and a second sub-order according to the order task,
dispatch the first sub-order to the first workstation located in the first storage area, and send a first handling instruction to the first inventory receptacle handling device,
dispatch the second sub-order to the second workstation located in the second storage area, and send a second handling instruction to the second inventory receptacle handling device, and
send a third handling instruction to the order receptacle handling device after determining that a selecting task corresponding to one sub-order of the two sub-orders is completed;
wherein the first inventory receptacle handling device is configured to, when the first sub-order is dispatched to the first workstation in the first storage area, transport a specified first inventory receptacle from the first storage area to the first workstation in response to the first handling instruction;
wherein the second inventory receptacle handling device is configured to, when the second sub-order is dispatched to the second workstation in the second storage area, transport a specified second inventory receptacle from the second storage area to the second workstation in response to the second handling instruction; and
wherein the order receptacle handling device is configured to, in response to the third handling instruction, transport an order receptacle containing a product selected at the first workstation to the second workstation, or transport an order receptacle containing a product selected at the second workstation to the first workstation.

2. The warehouse management system according to claim 1, wherein the first inventory receptacle is a movable inventory shelf, and the first inventory receptacle handling device is a shelf handling robot; and
the shelf handling robot is further configured to transport a specified movable inventory shelf from the first storage area to the first workstation in response to the first handling instruction.

3. The warehouse management system according to claim 1, wherein the second inventory receptacle is an inventory tote, and the second inventory receptacle handling device is a tote handling robot; and
the tote handling robot is further configured to transport a specified inventory tote from the second storage area to the second workstation in response to the second handling instruction.

4. The warehouse management system according to any one of claims 1 to 3, wherein the order receptacle is a movable order shelf, an order tote, or a movable order shelf provided with an order tote.

5. The warehouse management system according to claim 4, wherein the order receptacle handling device is a shelf handling robot or a tote handling robot.

6. The warehouse management system according to claim 5, wherein
the shelf handling robot is configured to transport the movable order shelf selected at the first workstation to the second workstation; or
the tote handling robot is configured to transport the order tote selected at the second workstation to the first workstation.

7. A warehouse management system, comprising: a control server, a first storage area, a second storage area, a first inventory receptacle handling device, a second inventory receptacle handling device and an order receptacle handling device, wherein a first inventory receptacle and a first workstation are arranged in the first storage area, a second inventory receptacle and a second workstation are arranged in the second storage area, and the first inventory receptacle handling device and the second inventory receptacle handling device are communicatively connected to the control server;
wherein the control server is configured to:
when it is determined that order products in an order task are to be selected from both the first inventory receptacle in the first storage area and the second inventory receptacle in the second storage area, split the order task into a first sub-order and a second sub-order according to the order task,
dispatch the first sub-order to the first workstation located in the first storage area, and send a first handling instruction to the first inventory receptacle handling device,
dispatch the second sub-order to the second workstation located in the second storage area, and send a second handling instruction to the second inventory receptacle handling device, and
send a third handling instruction to the order receptacle handling device after determining that a selecting task corresponding to one sub-order of the two sub-orders is completed;
wherein the first inventory receptacle handling device is configured to, when the first sub-order is dispatched to the first workstation in the first storage area, transport a specified first inventory receptacle from the first storage area to the first workstation in response to the first handling instruction;
wherein the second inventory receptacle handling device is configured to, when the second sub-order is dispatched to the second workstation in the second storage area, transport a specified second inventory receptacle from the second storage area to the second workstation in response to the second handling instruction; and
wherein the order receptacle handling device is configured to, in response to the third handling instruction, transport an order receptacle containing a product selected at the first workstation and an order receptacle containing a product selected at the second workstation to a specified confluence location to complete order consolidation.

8. The warehouse management system according to claim 7, wherein the first inventory receptacle is a movable inventory shelf, and the first inventory receptacle handling device is a shelf handling robot; and
the shelf handling robot is further configured to transport a specified movable inventory shelf from the first storage area to the first workstation in response to the first handling instruction.

9. The warehouse management system according to claim 7, wherein the second inventory receptacle is an inventory tote, and the second inventory receptacle handling device is a tote handling robot; and
the tote handling robot is further configured to transport a specified inventory tote from the second storage area to the second workstation in response to the second handling instruction.

10. The warehouse management system according to any one of claims 7 to 9, wherein the order receptacle is a movable order shelf, an order tote, or a movable order shelf provided with an order tote.

11. The warehouse management system according to claim 10, wherein the order receptacle handling device is the shelf handling robot or the tote handling robot.

12. The warehouse management system according to claim 11, wherein
the shelf handling robot is configured to transport the movable order shelf selected at the first workstation to the specified confluence location to complete the order consolidation; or
the tote handling robot is configured to transport the order tote selected at the second workstation to the specified confluence location to complete the order consolidation.

13. A warehouse management system, comprising: a control server, a first storage area, a second storage area, a first inventory receptacle handling device and a second inventory receptacle handling device, wherein a first inventory receptacle is arranged in the first storage area, a second inventory receptacle is arranged in the second storage area, a workstation is arranged and shared by the first storage area and the second storage area, and the first inventory receptacle handling device and the second inventory receptacle handling device are communicatively connected to the control server;
wherein the control server is configured to, when it is determined that products in an inventory task are to be selected from both the first inventory receptacle in the first storage area and the second inventory receptacle in the second storage area, dispatch the inventory task to a workstation according to the inventory task, send a first handling instruction to the first inventory receptacle handling device, and send a second handling instruction to the second inventory receptacle handling device;
the first inventory receptacle handling device is configured to transport a specified first inventory receptacle from the first storage area to the workstation in response to the first handling instruction; and
the second inventory receptacle handling device is configured to transport a specified second inventory receptacle from the second storage area to the workstation in response to the second handling instruction.

14. The warehouse management system according to claim 13, wherein the inventory task comprises at least one selected from a storage task, an order task or a combination thereof.

15. The warehouse management system according to claim 13, wherein the first inventory receptacle is a movable inventory shelf, and the first inventory receptacle handling device is a shelf handling robot; and
the shelf handling robot is further configured to transport a specified movable inventory shelf from the first storage area to the workstation in response to the first handling instruction.

16. The warehouse management system according to claim 13, wherein the second inventory receptacle is an inventory tote, and the second inventory receptacle handling device is a tote handling robot; and
the tote handling robot is further configured to transport a specified inventory tote from the second storage area to the workstation in response to the second handling instruction.

17. The warehouse management system according to claim 14, wherein
the control server is further configured to, in the case that the inventory task is the storage task, classify products to be stored into a first type of product to be stored of the first storage area and a second type of product to be stored of the second storage area according to a preset product classification rule, split the storage task into a first subtask for storing the first type of product to be stored and a second subtask for storing the second type of product to be stored, and dispatch the first subtask and the second subtask to the workstation.

18. The warehouse management system according to claim 17, wherein the control server is further configured to classify the products to be stored into the first type of product to be stored and the second type of product to be stored according to at least one selected from shape information, popularity information, relevance information of the products or any combination thereof.

19. A warehouse management system, comprising: a control server, a first storage area, a second storage area, a first inventory receptacle handling device, and a second inventory receptacle handling device, wherein a first inventory receptacle and a first workstation are arranged in the first storage area, a second inventory receptacle and a second workstation are arranged in the second storage area, and the first inventory receptacle handling device and the second inventory receptacle handling device are communicatively connected with the control server;
wherein the control server is configured to:
classify products to be stored of a storage task into a first type of product to be stored of the first storage area and a second type of product to be stored of the second storage area according to a preset product classification rule,
split the storage task into a first subtask and a second subtask,
dispatch the first subtask to the first workstation located in the first storage area, and send a first handling instruction to the first inventory receptacle handling device, and
dispatch the second subtask to the second workstation located in the second storage area, and send a second handling instruction to the second inventory receptacle handling device;
wherein the first inventory receptacle handling device is configured to, when the first subtask is dispatched to the first workstation of the first storage area, transport a specified first inventory receptacle from the first storage area to the first workstation in response to the first handling instruction; and
wherein the second inventory receptacle handling device is configured to, when the second subtask is dispatched to the second workstation of the second storage area, transport a specified second inventory receptacle from the second storage area to the second workstation in response to the second handling instruction.

20. The warehouse management system according to claim 19, wherein the control server is further configured to send a third handling instruction to the first inventory receptacle handling device after the first subtask is completed, and send a fourth handling instruction to the second inventory receptacle handling device after the second subtask is completed;
the first inventory receptacle handling device is further configured to transport the specified first inventory receptacle from the first workstation to a specified location of the first storage area in response to the third handling instruction; and
the second inventory receptacle handling device is further configured to transport the specified second inventory receptacle from the second workstation to a specified location of the second storage area in response to the fourth handling instruction.

21. The warehouse management system according to claim 19, wherein the control server is further configured to classify the products to be stored into the first type of product to be stored and the second type of product to be stored according to at least one selected from shape information, popularity information, relevance information of the products or any combination thereof.

22. A warehouse management method, comprising:
performing, by a control server, operations of:
when it is determined that order products in an order task are to be selected from both a first inventory receptacle in a first storage area and a second inventory receptacle in a second storage area, splitting the order task into a first sub-order and a second sub-order according to the order task,
dispatching the first sub-order to a first workstation located in the first storage area, and sending a first handling instruction to a first inventory receptacle handling device,
dispatching the second sub-order to a second workstation located in the second storage area, and sending a second handling instruction to a second inventory receptacle handling device, and
sending a third handling instruction to an order receptacle handling device after determining that a selecting task corresponding to one sub-order of the two sub-orders is completed;
transporting, by the first inventory receptacle handling device, a specified first inventory receptacle from the first storage area to the first workstation in response to the first handling instruction when the first sub-order is dispatched to the first workstation in the first storage area;
transporting, by the second inventory receptacle handling device, a specified second inventory receptacle from the second storage area to the second workstation when the second sub-order is dispatched to the second workstation in the second storage area in response to the second handling instruction; and
transporting, by the order receptacle handling device, an order receptacle containing a product selected at the first workstation to the second workstation or an order receptacle containing a product selected at the second workstation to the first workstation in response to the third handling instruction.

23. The warehouse management method according to claim 22, wherein the first inventory receptacle is a movable inventory shelf, and the first inventory receptacle handling device is a shelf handling robot; and the shelf handling robot is configured to transport a specified movable inventory shelf from the first storage area to the first workstation in response to the first handling instruction.

24. The warehouse management method according to claim 22, wherein the second inventory receptacle is an inventory tote, and the second inventory receptacle handling device is a tote handling robot; and
the tote handling robot is configured to transport a specified inventory tote from the second storage area to the second workstation in response to the second handling instruction.

25. The warehouse management method according to any one of claims 22 to 24, wherein the order receptacle is a movable order shelf, an order tote, or an order shelf provided with an order tote; the order receptacle handling device is the shelf handling robot or the tote handling robot;
the shelf handling robot is configured to transport the movable order shelf selected at the first workstation to the second workstation; and
the tote handling robot is configured to transport the order tote selected at the second workstation to the first workstation.

26. A warehouse management method, comprising:
performing, by a control server, operations of:
when it is determined that order products in an order task are to be selected from both a first inventory receptacle in a first storage area and a second inventory receptacle in a second storage area, splitting the order task into a first sub-order and a second sub-order according to the order task,
dispatching the first sub-order to a first workstation located in the first storage area, and sending a first handling instruction to a first inventory receptacle handling device,
dispatching the second sub-order to a second workstation located in the second storage area, and sending a second handling instruction to a second inventory receptacle handling device, and
sending a third handling instruction to an order receptacle handling device after determining that a selecting task corresponding to one sub-order of the two sub-orders is completed;
transporting, by the first inventory receptacle handling device, a specified first inventory receptacle from the first storage area to the first workstation in response to the first handling instruction when the first sub-order is dispatched to the first workstation in the first storage area;
transporting, by the second inventory receptacle handling device, a specified second inventory receptacle from the second storage area to the second workstation in response to the second handling instruction when the second sub-order is dispatched to the second workstation in the second storage area; and
transporting, by the order receptacle handling device, an order receptacle containing a product selected at the first workstation and an order receptacle containing a product selected at the second workstation to a specified confluence location to complete order consolidation in response to the third handling instruction.

27. The warehouse management method according to claim 26, wherein the first inventory receptacle is a movable inventory shelf, and the first inventory receptacle handling device is a shelf handling robot; and
the shelf handling robot is configured to transport a specified movable inventory shelf from the first storage area to the first workstation in response to the first handling instruction.

28. The warehouse management method according to claim 26, wherein the second inventory receptacle is an inventory tote, and the second inventory receptacle handling device is a tote handling robot; and
the tote handling robot is configured to transport a specified inventory tote from the second storage area to the second workstation in response to the second handling instruction.

29. The warehouse management method according to any one of claims 26 to 28, wherein the order receptacle is a movable order shelf, an order tote, or an order shelf provided with an order tote.

30. The warehouse management method according to claim 29, wherein the order receptacle handling device is the shelf handling robot or the tote handling robot.

31. The warehouse management method according to claim 30, wherein the shelf handling robot is configured to transport the movable order shelf selected at the first workstation to the specified confluence location to complete order consolidation; and
the tote handling robot is configured to transport the order tote selected at the second workstation to the specified confluence location to complete order consolidation.

32. A warehouse management method, comprising:
performing, by a control server, operations of: when it is determined that products in an inventory task are to be selected from both a first inventory receptacle in a first storage area and a second inventory receptacle in a second storage area, dispatching the inventory task to a workstation, sending a first handling instruction to a first inventory receptacle handling device, and sending a second handling instruction to a second inventory receptacle handling device according to the inventory task;
transporting, by the first inventory receptacle handling device, a specified first inventory receptacle from the first storage area to the workstation in response to the first handling instruction; and
transporting, by the second inventory receptacle handling device, a specified second inventory receptacle from the second storage area to the workstation in response to the second handling instruction.

33. The warehouse management method according to claim 32, wherein the inventory task comprises at least one selected from a storage task, an order task or a combination thereof.

34. A warehouse management method, comprising:
performing, by a control server, operations of:
classifying products to be stored of a storage task into a first type of product to be stored and a second type of product to be stored according to a preset product classification rule,
splitting the storage task into a first subtask and a second subtask,
dispatching the first subtask to a first workstation located in a first storage area, and sending a first handling instruction to a first inventory receptacle handling device, and
dispatching the second subtask to a second workstation located in a second storage area, and sending a second handling instruction to a second inventory receptacle handling device;
transporting, by the first inventory receptacle handling device, a specified first inventory receptacle from the first storage area to the first workstation in respond to the first handling instruction when the first subtask is dispatched to the first workstation of the first storage area; and
transporting, by the second inventory receptacle handling device, a specified second inventory receptacle from the second storage area to the second workstation in respond to the second handling instruction when the second subtask is dispatched to the second workstation of the second storage area.

35. The warehouse management method according to claim 34, wherein the control server is configured to send a third handling instruction to the first inventory receptacle handling device after the first subtask is completed, and send a fourth handling instruction to the second inventory receptacle handling device after the second subtask is completed;
the first inventory receptacle handling device is configured to transport the specified first inventory receptacle from the first workstation to a specified location of the first storage area in response to the third handling instruction; and
the second inventory receptacle handling device is configured to transport the specified second inventory receptacle from the second workstation to a specified location of the second storage area in response to the fourth handling instruction.

36. The warehouse management system according to claim 34, wherein the control server is configured to classify the products to be stored into the first type of product to be stored and the second type of product to be stored according to at least one selected from shape information, popularity information, relevance information of the products or any combination thereof.
